# EUROPÄISCHE PATENTANMELDUNG

(11) **EP 4 304 027 A1**
(43) Veröffentlichungstag der Anmeldung: **10.01.2024**
(21) Anmeldenummer: 23181171.2
(22) Anmeldetag: 23.06.2023
(51) Int. Cl.: H02G 1/12

(54) **WERKZEUG ZUR ABISOLIERUNG EINES ELEKTRISCHEN LEITERS**

(30) Priorität: 08.07.2022 DE 102022117122
(71) Anmelder: Wago Verwaltungsgesellschaft mbH, 32423 Minden (DE)
(72) Erfinder: Türkeköle, Muhammet Ali, 32427 Minden (DE); Lorenschat, Markus, 32457 Porta Westfalica (DE); Witte, Thomas, 32457 Porta Westfalica (DE)
(74) Vertreter: Günther, Constantin

(57) **Zusammenfassung**

Die Erfindung betrifft ein Werkzeug zur Abisolierung eines elektrischen Leiters, mit einem Werkzeuggehäuse, wobei das Werkzeuggehäuse einen Aufnahmekanal zur Aufnahme des elektrischen Leiters hat, und mit einem ersten Schneidelement, wobei das erste Schneidelement über ein Einstellelement an den eingelegten elektrischen Leiter derart zustellbar ist, sodass das erste Schneidelement in einen Isoliermantel des elektrischen Leiters schneidet. Das erste Schneidelement ist entlang einer Führungskontur in einer Längserstreckungsrichtung des Werkzeuges verschieblich gelagert.

## Beschreibung

Die Erfindung betrifft ein Werkzeug zur Abisolierung eines elektrischen Leiters, mit einem Werkzeuggehäuse, wobei das Werkzeuggehäuse einen Aufnahmekanal zur Aufnahme des elektrischen Leiters hat, und mit einem ersten Schneidelement, wobei das erste Schneidelement über ein Einstellelement an den eingelegten elektrischen Leiter derart zustellbar ist, sodass das erste Schneidelement in einen Isoliermantel des elektrischen Leiters schneidet.

DE 42 35 536 C1 offenbart ein Abisoliergerät für elektrische Leiter mit einem Bearbeitungskanal, wobei in den Bearbeitungskanal der elektrische Leiter eingelegt werden kann. Das Abisoliergerät weist eine Messerkasette auf, wobei über die Messerkasesste wenigstens ein Abisoliermesser am Umfang des Bearbeitungskanals platziert werden kann.

DE 203 02 948 U1 ein Entmantelungswerkzeug zum Abtretten einer Ummantelung eines Kabels Merschichtkabels, wobei das Mehrschichtkabel mit einer Vielzahl von elektrischen Leitern versehen ist. Das Entmantelungswerkzeug hat einen Bearbeitungskanal, in den zwei Abisoliermesser unterschiedlich weit hineinragen.

Derartige Abisolierwerkzeuge haben den Nachteil, dass ein Längsschnitt in Längserstreckungsrichtung des elektrischen Leiters nicht möglich ist oder in einem manuellen zusätzlichen Schritt durch den Anwender selbst durchgeführt werden muss.

Ausgehend hiervon ist es Aufgabe der vorliegenden Erfindung ein verbessertes Werkzeug zu schaffen.

Die Aufgabe wird mit einem Werkzeug mit den Merkmalen des Anspruchs 1 gelöst. Vorteilhafte Ausführungsformen sind in den Unteransprüchen beschrieben.

Bei dem gattungsgemäßen Werkzeug wird vorgeschlagen, dass das erste Schneidelement entlang einer Führungskontur in einer Längserstreckungsrichtung des Werkzeuges verschieblich gelagert ist.

Die Führungskontur ist insbesondere eine Kontur, in oder an der das erste Schneidelement in Längserstreckungsrichtung des Werkzeuges geführt werden kann, bzw. gelagert ist, um einen länglichen Schnitt in Längserstreckungsrichtung des elektrischen Leiters zu ermöglichen. Die Führungskontur kann zum Beispiel eine Ausnehmung, insbesondere eine längliche Ausnehmung, im Werkzeuggehäuse sein, in der das Schneidelement führbar ist.

Die Längserstreckungsrichtung des Werkzeuges entspricht dabei der Längserstreckungsrichtung des eingelegten elektrischen Leiters. In Längserstreckung verschieblich impliziert eine Bewegung, die einen translatorischen Bewegungsanteil beinhaltet, wobei eine kombinierte translatorische/rotatorische Bewegung nicht ausgeschlossen ist. Die Längserstreckungsrichtung ist dabei die Richtung, in der das Werkzeug seine größte Erstreckung aufweist, also die Richtung der längsten Abmessung des Werkzeuges.

Gemäß einer vorteilhaften Ausgestaltung der Erfindung ist das Werkzeug dazu eingerichtet, einen Längsschnitt in Längserstreckungsrichtung des elektrischen Leiters mittels wenigstens des ersten Schneidelements durch den Isoliermantel des elektrischen Leiters auszuführen. Vorteilhafter Weise ist somit das erfindungsgemäße Werkzeug mit einer Längsschnittfähigkeit ausgebildet, sodass der Isoliermantel des elektrischen Leiters in Längserstreckungsrichtung aufgeschnitten oder zumindest eingeschnitten werden kann. Auf diese Weise kann der elektrische Leiter besonders effizient abisoliert werden. Insbesondere kann der aufgeschnittene Isoliermantel leicht entfernt werden, ohne größere Längskräfte auf den innenliegenden elektrischen Leiter auszuüben. Der Längsschnitt kann dabei vollständig oder überwiegend durch das entlang der Führungskontur in der Längserstreckungsrichtung geführte erste Schneidelement ausgeführt werden. Nach Durchführung des Längsschnitts kann der aufgeschnittene Teilbereich des Isoliermantels abgeschält werden.

Über das Einstellelement kann auch die Tiefe des Schnittes eingestellt werden, damit unterschiedliche Mantelstärken abisoliert werden können.

Das Werkzeuggehäuse und der aufgenommene elektrische Leiter können relativ zueinander koaxial bewegbar sein.

Durch die koaxiale Bewegung des Werkzeuggehäuses und des elektrischen Leiters zueinander kann der Isoliermantel radial eingeschnitten werden ohne weitere Einrichtungen bereitzustellen, die ein Führen des ersten Schneidelementes über den Umfang des elektrischen Leiters ermöglichen.

Das Werkzeug kann ein zweites Schneidelement haben, wobei das zweite Schneidelement dazu eingerichtet ist, den Isoliermantel des elektrischen Leiters radial einzuschneiden. Ferner vorteilhaft kann die Führungskontur an dem zweiten Schneidelement angeordnet sein.

Das Werkezeug kann ein drittes Schneidelement haben, wobei das dritte Schneidelement dazu eingerichtet ist, den Isoliermantel des elektrischen Leiters radial einzuschneiden. Ferner vorteilhaft kann die Führungskontur zwischen dem zweiten Schneidelement und dem dritten Schneidelement angeordnet sein.

Insbesondere durch die Kombination eines zweiten und dritten Schneidelementes, kann der elektrische Leiter auf einfache Weise an einer zielgerichteten Position abisoliert werden. Durch die Anordnung der Führungskontur zwischen dem zweiten und dritten Schneidelement wird ermöglicht, dass das erste Schneidelement entlang der Führungskontur den Isoliermantel einschneiden kann. Somit kann der elektrische Leiter über eine vorher definierte Länge auf einfache Weise abisoliert werden.

Der Aufnahmekanal zur Aufnahme des elektrischen Leiters des Werkzeuggehäuses kann in einem Querschnitt kreisförmig ausgebildet sein.

Auf diese Weise kann der elektrische Leiter im Wesentlichen passgenau in das Werkzeuggehäuse eingelegt werden, ohne das zusätzliche Fixiereinrichtung den elektrischen Leiter in dem Werkzeuggehäuse fixieren muss.

Das Werkzeuggehäuse kann zumindest zweiteilig ausgebildet sein, wobei das Werkzeuggehäuse aufklappbar ausgebildet ist.

Dabei ist denkbar, dass die Aufklappbarkeit zum Beispiel über ein Scharnier erreicht werden kann. Das Werkzeuggehäuse kann auch einteilig und aufklappbar ausgebildet sein, sofern das Scharnier integral ausgebildet ist. Auf diese Weise kann ein Werkzeug bereitgestellt werden, bei dem ein Einlegen des elektrischen Leiters erleichtert ist.

Das zweite Schneidelement und/oder das dritte Schneidelement können in Längserstreckungsrichtung des Werkzeuges derart verschieblich gelagert sein, dass die Länge zwischen dem zweiten Schneidelement und dem dritten Schneidelement verkleinert oder vergrößert wird.

Auf diese Weise kann die Länge der Abisolierung durch das Werkzeug auf einfache Weise an den entsprechenden Anwendungsfall angepasst werden, indem ein Schneidweg des ersten Schneidelementes zwischen dem zweiten und dritten Schneidelement variiert werden kann.

Das erste Schneidelement kann an einem verfahrbaren Schlitten angeordnet sein.

Durch den Schlitten kann das erste Schneidelement auf einfache Weise in der Führungskontur verschieblich geführt werden, wodurch zum Beispiel das Handling des Werkzeuges verbessert werden kann.

Die Führungskontur kann mäanderförmig ausgebildet sein. Alternativ kann die Führungskontur linear ausgebildet sein.

Durch die Ausbildung einer entsprechenden Führungskontur kann der Schnitt mittels des ersten Schneidelementes durch den Isoliermantel des elektrischen Leiters in Abhängigkeit einer vorgegebenen Geometrie erfolgen. Die mäanderformige Ausbildung hat dabei den Vorteil, dass der Isoliermantel auf einfache Weise nach dem Einschnitt abgeschält werden kann. Ein linearer Schnitt mittels des ersten Schneidelementes kann einen kurzen Schneidweg und damit ein vereinfachtes Handling des Werkzeuges ermöglichen.

Eine Kombination der vorgenannten Konturen der Führungskontur ist dabei denkbar, indem ein Teil der Führungskontur mäanderförmig und ein weiterer Teil linear ausgebildet ist.

Es sind auch andere Führungskonturen, wie zum Beispiel eine Zick-Zack-Führung oder eine Kulissenführung, die beliebige geometrische Bahnen abbilden kann, denkbar.

An dem Werkzeuggehäuse kann eine Fixiereinrichtung angeordnet sein, wobei der elektrische Leiter in dem Aufnahmekanal fixierbar ist.

Durch die Fixiereinrichtung kann der elektrische Leiter an einer vordefinierten Position im Werkzeuggehäuse gehalten werden, sodass die Abisolierung des elektrischen Leiters an der vordefinierten Position erfolgt. Die Möglichkeit eines Verrutschens des elektrischen Leiters in dem Werkzeuggehäuse wird somit verringert bzw. gänzlich verhindert.

Der elektrische Leiter kann vor dem Längsschnitt zum Beispiel durch eine Greifbacke oder ein Niederhalter fixiert werden. Somit kann eine Relativbewegung in dem Aufnahmekanal verhindert werden, wodurch der Längsschnitt sauberer und auch die Schlittenbewegung einfacher wird, weil das Kabel nicht versehentlich von dem Messer mitgenommen werden kann.

Das zweite Schneidelement kann auf einem zweiten verfahrbaren Schlitten und/oder das dritte Schneidelement kann auf einem dritten verfahrbaren Schlitten angeordnet sein, wobei der zweite verfahrbare Schlitten und/oder der dritte verfahrbare Schlitten um den Umfang des Werkzeuggehäuses führbar sind.

Dabei kann grundsätzlich eine Fixierung des elektrischen Leiters nach dem Einlegen in den Aufnahmekanal erfolgen und man erhält saubere Schnitte mit einfacher Handhabung. Der zweite Schlitten und der dritte Schlitten können dabei wie das erste Schneidelement auf oder in einer dafür vorgesehenen Führungskontur geführt werden.

An dem Werkzeug kann ein Rastelement angeordnet sein, wobei das Rastelement mit dem Schlitten derart in Eingriff bringbar ist, dass das erste Schneidelement auf ein anderes Höhenniveau hebbar und von dem eingelegten elektrischen Leiter weg bewegbar ist.

Auf diese Weise kann das erste Schneidelement in einer Art Grundstellung von dem eingelegten elektrischen Leiter weg bewegt werden, sodass das erste Schneidelement nicht mehr in den elektrischen Leiter schneidet. Auf diese Weise kann ein eingelegter elektrischer Leiter einfacher aus dem Werkzeuggehäuse entfernt werden, ohne dass das erste Schneidelement durch den elektrischen Leiter beschädigt wird.

Weiterhin betrifft die Erfindung auch ein Verfahren zum Abisolieren eines elektrischen Leiters mit einem Werkzeug der zuvor erläuterten Art. Bei dem Verfahren kann mittels zumindest des ersten Schneidelements ein Längsschnitt in Längserstreckungsrichtung des elektrischen Leiters durch den Isoliermantel durchgeführt werden, insbesondere durch Entlangführen des ersten Schneidelements entlang der Führungskontur in Längserstreckungsrichtung des Werkzeugs.

Ein vorteilhaftes Verfahren zur Abisolierung eines elektrischen Leiters kann z.B. mit dem erfindungsgemäßen Werkzeug wie folgt ablaufen:
1. Der elektrische Leiter mit seinem Isoliermantel wird in das Werkzeug eingelegt, wofür das Werkzeug z.B. zunächst aufgeklappt und dann wieder geschlossen werden kann.
2. Danach kann ein Drehen des geschlossenen Werkzeugs um den elektrischen Leiter durchgeführt werden, wodurch das zweite und das dritte Schneidelement gleichzeitig eine radiale Einschneidung des Isoliermantels an zwei voneinander beabstandeten Stellen erfolgt.
3. Zuvor, gleichzeitig oder danach kann der Isoliermantel mittels des ersten Schneidelements in Längsrichtung eingeschnitten oder aufgeschnitten werden, indem das erste Schneidelement entlang der Führungskontur in der Längserstreckungsrichtung des Werkzeugs verschoben wird. Dabei kann der Längsschnitt beispielsweise von dem ersten bis zu dem zweiten Radialschnitt erfolgen.
4. Nach dem Öffnen des Werkzeugs kann der elektrische Leiter wieder entnommen werden und der mittels der Schnitte aufgetrennte Teilbereich des Isoliermantels von dem innenliegenden elektrischen Leiter abgeschält werden.

Ganz allgemein sind im Zusammenhang mit dieser Anmeldung die Wörter "ein/eine", soweit nicht ausdrücklich anders definiert, nicht als Zahlwort zu verstehen, sondern als unbestimmte Artikel im Wortsinn von mindestens ein/eine".

Die Erfindung wird nachfolgend anhand von Ausführungsbeispielen beispielhaft mit den beigefügten Zeichnungen näher erläutert. Es zeigen:
- Figur 1: ein erfindungsgemäßes Werkzeug im geschlossenen Zustand in einer perspektivischen Ansicht;
- Figur 2a: ein erfindungsgemäßes Werkzeug nach Figur 1 in einer seitlichen Ansicht;
- Figur 2b: ein erfindungsgemäßes Werkzeug nach den Figuren 1 und 2a in einer seitlichen Schnittansicht;
- Figur 3: ein erfindungsgemäßes Werkzeug nach den Figuren 1 bis 2b im geöffneten Zustand in einer perspektivischen Ansicht;
- Figur 4a: ein erfindungsgemäßes Werkzeug nach Figur 3 in einer seitlichen Ansicht;
- Figur 4b: ein erfindungsgemäßes Werkzeug nach den Figuren 3 und 4a in einer seitlichen Schnittansicht.

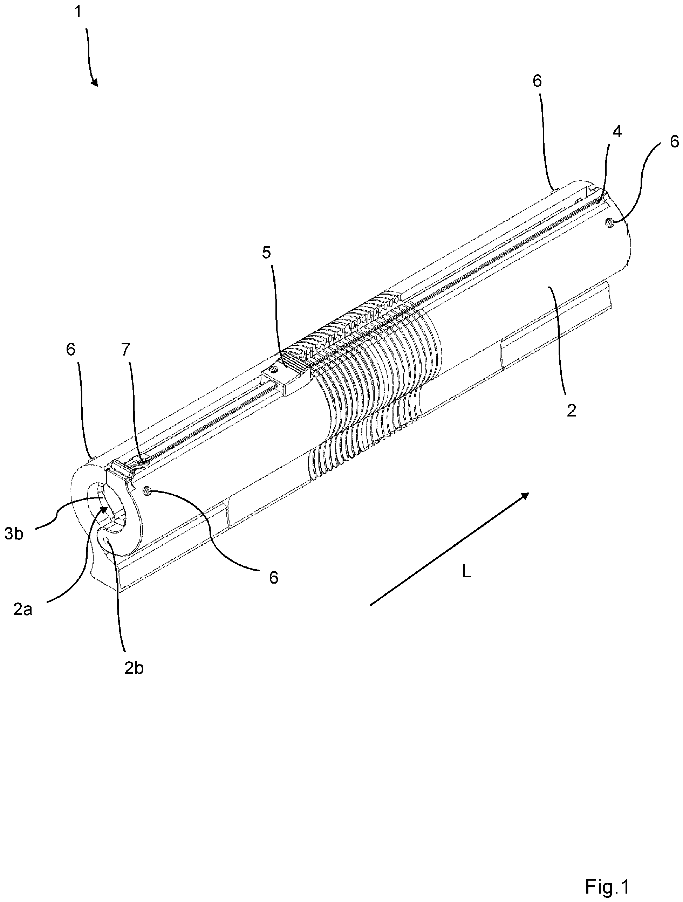

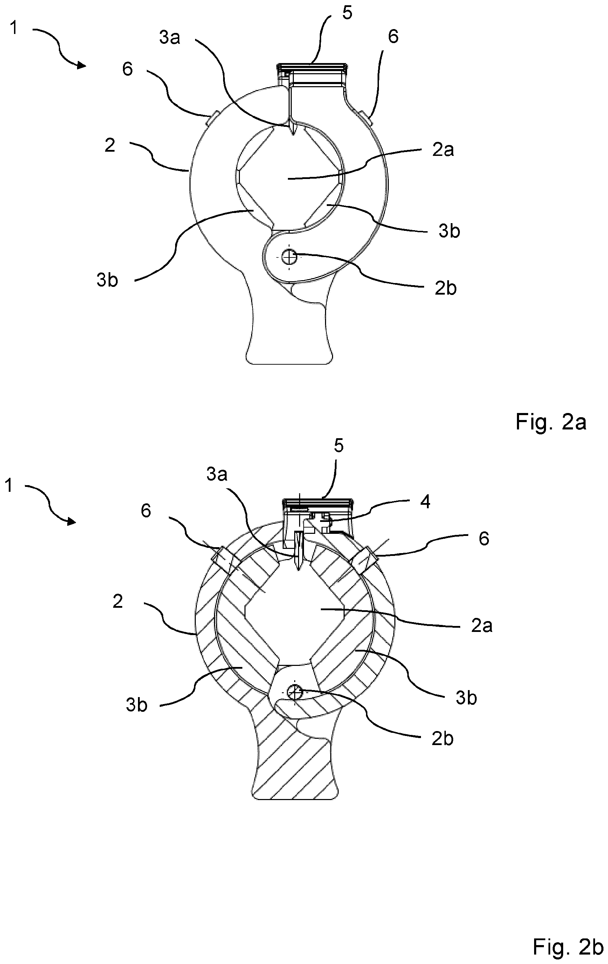

Figur 1 zeigt ein erfindungsgemäßes Werkzeug 1 zur Abisolierung eines elektrischen Leiters mit einem Isoliermantel im geschlossenen Zustand in einer perspektivischen Ansicht. Figur 2a zeigt das Werkzeug 1 nach Figur 1 in einer seitlichen Ansicht, wobei Figur 2b eine Schnittansicht des Werkzeuges 1 nach den Figuren 1 und 2a zeigt.

Das Werkzeug 1 hat ein Werkzeuggehäuse 2 mit einem Aufnahmekanal 2a zur Aufnahme eines elektrischen Leiters, wobei der elektrische Leiter in den Aufnahmekanal 2a zum Beispiel durch Aufklappen des Werkzeuggehäuses 2 über ein Scharnier 2b eingelegt oder durch Einschieben an einem der beiden diametral gegenüberliegenden Enden des Aufnahmekanals 2a eingeschoben werden kann.

An dem Werkzeug 1 ist ein erstes Schneidelement 3a, ein zweites Schneidelement 3b und ein drittes Schneidelement (nicht sichtbar) angeordnet sind. Das erste Schneidelement 3a ist dabei an einer Führungskontur 4 des Werkzeuggehäuses 2 derart verschieblich gelagert, dass es in einer Längserstreckungsrichtung L des Werkzeuges 1 in der Führungskontur 4 bewegbar ist. Für ein verbessertes Handling ist an dem ersten Schneidelement 3a ein verfahrbarer Schlitten 5 angeordnet. Über den Schlitten 5 kann das erste Schneidelement 3a entlang der Führungskontur 4 manuell verschoben werden.

Die Längserstreckungsrichtung L des Werkzeuges 1 entspricht dabei der Längserstreckungsrichtung des aufgenommenen elektrischen Leiters. Die Längserstreckungsrichtung L ist dabei die Richtung, in der das Werkzeug 1 seine größte Erstreckung aufweist, also die Richtung der längsten Abmessung des Werkzeuges 1.

Deutlich wird, dass der Schlitten 5 die Führungskontur 4 umgreift, sodass das erste Schneidelement 3a entlang dieser Führungskontur 4 geführt werden kann, um in den Isoliermantel des elektrischen Leiters zu schneiden.

Die Führungskontur 4 ist in dem vorliegenden Ausführungsbeispiel linear ausgebildet, d.h. das erste Schneidelement 3a kann nur translatorisch in der Führungskontur bewegt werden. Alternativ sind aber auch andere Bewegungen wie eine rotatorische Bewegung oder eine kombinierte translatorische/rotatorische Bewegung des ersten Schneidelementes 3a denkbar. So kann die Führungskontur 4 zum Beispiel auch mäanderförmig ausgebildet sein. Es ist auch eine Kombination aus einer linearen und mäanderförmigen Führungskontur 4 denkbar.

Die Führungskontur 4 ist dabei zwischen dem zweiten Schneidelement 3b und dem dritten Schneidelement (nicht sichtbar) angeordnet. Das zweite Schneidelement 3b und das dritte Schneidelement (nicht sichtbar) sind dabei an den diametral gegenüberliegenden Enden des Werkzeuggehäuses angeordnet und dort durch Schrauben mit dem Werkzeuggehäuse 2 verbunden. Die Schrauben dienen dabei als Einstellelement 6, wobei das jeweilige zweite Schnedelement 3b und/oder das dritte Schneidelement (nicht sichtbar) über das Einstellelement 6 an einen eingelegten elektrischen Leiter zustellbar sind. Es sind aber auch andere Formen von Einstellelementen 6 denkbar. Alternativ kann zum Beispiel ein Keil, Stifte oder Rasten als Einstellelement 6 zur Anwendung kommen.

Das zweite Schneidelement 3b und das dritte Schneidelement (nicht sichtbar) sind jeweils dazu eingerichtet den Isoliermantel des elektrischen Leiters radial über den Umfang einzuschneiden. Deutlich wird, dass das erste Schneidelement 3a dazu eingerichtet ist, den Isoliermantel des elektrischen Leiters entlang der Führungskontur 4 zwischen dem zweiten Schneidelement 3b und dem dritten Schneidelement (nicht sichtbar) einzuschneiden, sodass der Isoliermantel über eine definierte Abisolierlänge eingeschnitten werden kann. Nachdem Entfernen des elektrischen Leiters aus dem Werkzeuggehäuse 2 ist es möglich, den Isoliermantel über die Abisolierlänge zu entfernen. Auf diese Weise kann der elektrische Leiter über eine definierte Abisolerlänge auf einfache Weise abisoliert werden.

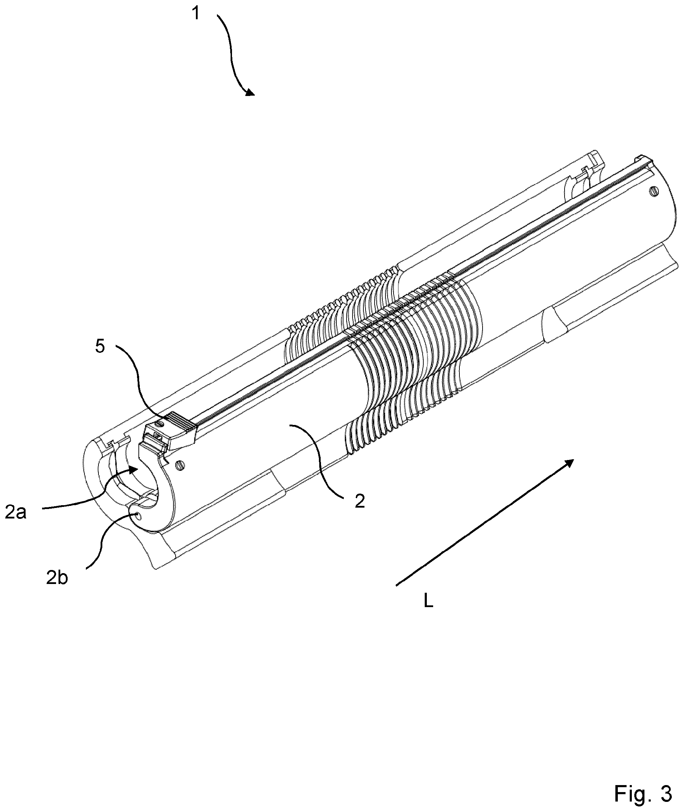

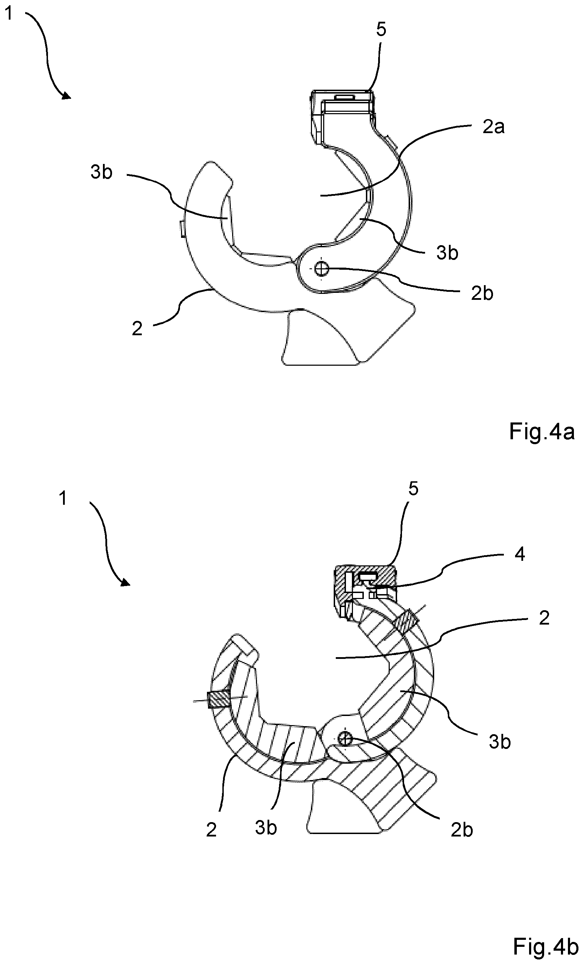

Figur 3 zeigt ein erfindungsgemäßes Werkzeug 1 nach den Figuren 1 bis 2b im geöffneten Zustand in einer perspektivischen Ansicht. Figur 4a zeigt ein erfindungsgemäßes Werkzeug 1 nach Figur 3 in einer seitlichen Ansicht, wobei Figur 4b ein erfindungsgemäßes Werkzeug 1 nach den Figuren 3 und 4a in einer seitlichen Schnittansicht zeigt.

Aus den Figuren 3 bis 4b wird noch einmal die einfache Handhabung des Werkzeuges 1 zur Abisolierung eines elektrischen Leiters deutlich. Durch das Scharnier 2b kann das zweiteilige Werkzeuggehäuse 2 aufgeklappt werden. In diesem Zustand kann ein elektrischer Leiter auf einfache Weise an der gewünschten Position in den Aufnahmekanal 2a des Werkzeuggehäuses 2 eingelegt werden. Nach dem Schließen des zweiteiligen Werkzeuggehäuses 2, kann das zweite Schneidelement 3b und das dritte Schneidelement (nicht sichtbar) entweder direkt in den Isoliermantel des eingelegten elektrischen Leiters schneiden oder das zweite Schneidelement 3b und das dritte Schneidelement (nicht sichtbar) könne zum Beispiel über ein Einstellelement näher an den elektrischen Leiter geführt werden, sodass das zweite Schneidelement 3b und das dritte Schneidelement 3b in den Isoliermantel des eingelegten elektrischen Leiters schneiden. Anschließend kann durch eine Rotation des Werkzeuges 1 um die Längsachse des Werkezeuges 1, die sich in die Richtung der Längserstreckungsrichtung L des Werkzeuges erstreckt, der elektrische Leiter über den Umfang an zwei voneinander beabstandeten Stellen eingeschnitten werden, wobei durch die Verschiebung des ersten Schneidelementes 3a mit Hilfe des Schlittens 5 entlang der Führungskontur 4 zwischen dem zweiten Schneidelement 3b und dem dritten Schneidelement 3c ein weiterer Einschnitt des Isoliermantels des eingelegten elektrischen Leiters erfolgt. Nach Entnahme des elektrischen Leiters aus dem Aufnahmekanal 2a kann der Isoliermantel durch die zwei Einschnitte über dem Umfang und durch den weiteren Einschnitt dazwischen auf einfache Weise abgeschält werden.

Aus der Zusammenschau der Figuren 1 bis 4b wird weiterhin deutlich wird weiterhin, dass der in dem Aufnahmekanal 2a des Werkzeuggehäuses 2 aufgenommene elektrische Leiter und das Werkzeuggehäuse 2 relativ zueinander koaxial bewegbar ausgebildet sind. Auf diese Weise kann der Isoliermantel des elektrischen Leiters radial durch das zweite Schneidelement 3b und das dritte Schneidelement 3c sauber eingeschnitten werden ohne ein zusätzliches Element bereitzustellen, das ein Führen des zweiten Schneidelementes 3b und des dritten Schneidelementes 3c ermöglicht. Durch das erste Schneidelement 3a kann dann ein sauberer Schnitt zwischen dem zweiten Schneidelement 3b und dem dritten Schneidelement 3c erfolgen, um den Isoliermantel des elektrischen Leiters entlang der Abisolierlänge sauber abschälen zu können.

Aus den Figuren 1 und 3 wird weiterhin deutlich, dass das Werkzeug 1 ein Rastelement 7 hat. Das Rastelement 7 ist dabei derartig ausgebildet, dass das erste Schneidelement 3a außer Eingriff steht, sobald der Schlitten 5 mit dem Rastelement 7 in Eingriff steht. Außer Eingriff bedeutet insbesondere, dass das erste Schneidelement 3a nicht mehr in einen eingelegten elektrischen Leiter schneiden kann. Das Rastelement 7 ist dabei rampenartig ausgebildet, sodass der Schlitten auf ein anderes Höhenniveau gehoben werden kann, wodurch das erste Schneidelement 3a vom eingelegten elektrischen Leiter weg bewegbar ist.

### Bezugszeichenliste

- 1: Werkzeug
- 2: Werkzeuggehäuse
- 2a: Aufnahmekanal
- 2b: Scharnier
- 3a: Erstes Schneidelement
- 3b: Zweites Schneidelement
- 3c: Drittes Schneidelement
- 4: Führungskontur
- 5: Schlitten
- 6: Einstellelement
- 7: Rastelement
- L: Längserstreckungsrichtung

## Patentansprüche

1. Werkzeug (1) zur Abisolierung eines elektrischen Leiters, mit einem Werkzeuggehäuse (2), wobei das Werkzeuggehäuse (2) einen Aufnahmekanal (2a) zur Aufnahme des elektrischen Leiters hat, und mit einem ersten Schneidelement (3a), wobei das erste Schneidelement (3a) über ein Einstellelement (6) an den eingelegten elektrischen Leiter derart zustellbar ist, sodass das erste Schneidelement (3a) in einen Isoliermantel des elektrischen Leiters schneidet, **dadurch gekennzeichnet, dass** das erste Schneidelement (3a) entlang einer Führungskontur (4) in einer Längserstreckungsrichtung (L) des Werkzeuges (1) verschieblich gelagert ist.

2. Werkzeug (1) nach Anspruch 1, **dadurch gekennzeichnet, dass** das Werkzeuggehäuse (2) und der aufgenommene elektrische Leiter relativ zueinander koaxial bewegbar sind.

3. Werkzeug (1) nach einem der vorhergehenden Ansprüche, **dadurch gekennzeichnet, dass** das Werkzeug (1) ein zweites Schneidelement (3b) hat, wobei das zweite Schneidelement (3b) dazu eingerichtet ist, den Isoliermantel des elektrischen Leiters radial einzuschneiden.

4. Werkzeug (1) nach Anspruch 3, **dadurch gekennzeichnet, dass** die Führungskontur (4) an dem zweiten Schneidelement (3b) angeordnet ist.

5. Werkzeug (1) nach Anspruch 3 oder 4, **dadurch gekennzeichnet, dass** das Werkzeug ein drittes Schneidelement (3c) hat, wobei das dritte Schneidelement (3c) dazu eingerichtet ist, den Isoliermantel des elektrischen Leiters radial einzuschneiden.

6. Werkzeug (1) nach Anspruch 5, **dadurch gekennzeichnet, dass** die Führungskontur (4) zwischen dem zweiten Schneidelement (3b) und dem dritten Schneidelement (3c) angeordnet ist.

7. Werkzeug (1) nach einem der vorhergehenden Ansprüche, **dadurch gekennzeichnet, dass** der Aufnahmekanal (2a) zur Aufnahme des elektrischen Leiters des Werkzeuggehäuses (2) in einem Querschnitt kreisförmig ausgebildet ist.

8. Werkzeug (1) nach einem der vorhergehenden Ansprüche, **dadurch gekennzeichnet, dass** das Werkzeuggehäuse (2) zumindest zweiteilig ausgebildet ist, wobei das Werkzeuggehäuse (2) aufklappbar ausgebildet ist.

9. Werkzeug (1) nach einem der Ansprüche 3 bis 6, **dadurch gekennzeichnet, dass** das zweite Schneidelement (3b) und/oder das dritte Schneidelement (3c) in Längserstreckungsrichtung (L) des Werkzeuges (1) derart verschieblich gelagert sind, dass die Länge zwischen dem zweiten Schneidelement (3b) und dem dritten Schneidelement (3c) verkleinert oder vergrößert wird.

10. Werkzeug (1) nach einem der vorhergehenden Ansprüche, **dadurch gekennzeichnet, dass** das erste Schneidelement (3a) an einem verfahrbaren Schlitten (5) angeordnet ist.

11. Werkzeug (1) nach einem der vorhergehenden Ansprüche, **dadurch gekennzeichnet, dass** die Führungskontur (4) mäanderförmig ausgebildet ist.

12. Werkzeug (1) nach einem der Ansprüche 1 bis 10, **dadurch gekennzeichnet, dass** die Führungskontur (4) linear ausgebildet ist.

13. Werkzeug (1) nach einem der vorhergehenden Ansprüche, **dadurch gekennzeichnet, dass** an dem Werkzeuggehäuse (2) eine Fixiereinrichtung angeordnet ist, wobei der elektrische Leiter in dem Aufnahmekanal (2a) fixierbar ist.

14. Werkzeug (1) nach einem der Ansprüche 3 bis 13, **dadurch gekennzeichnet, dass** das zweite Schneidelement (3b) auf einem zweiten verfahrbaren Schlitten und/oder das dritte Schneidelement (3c) auf einem dritten verfahrbaren Schlitten angeordnet sind, wobei der zweite verfahrbare Schlitten und/oder der dritte verfahrbare Schlitten um den Umfang des Werkzeuggehäuses (2) führbar sind.

15. Werkzeug (1) nach einem der Ansprüche 10 bis 14, **dadurch gekennzeichnet, dass** an dem Werkzeug (1) ein Rastelement (7) angeordnet ist, wobei das Rastelement (7) mit dem Schlitten (5) derart in Eingriff bringbar ist, dass das erste Schneidelement (3a) auf ein anderes Höhenniveau hebbar und von dem eingelegten elektrischen Leiter weg bewegbar ist.
